# EUROPEAN PATENT APPLICATION

(11) **EP 2 423 021 A1**
(43) Date of publication of application: **29.02.2012**
(21) Application number: 10173983.7
(22) Date of filing: 25.08.2010
(51) Int. Cl.: B60J 5/06

(54) **A vehicle having a sliding door with lock**

(71) Applicant: Tofas Turk Otomobil Fabrikasi Anonim Sirketi, 16369 Bursa (TR)
(72) Inventor: Dedeoglu, Seref, 16369, Bursa (TR); Aydin, Yusuf, 16369, Bursa (TR); Gulustan, Rasim, 16369, Bursa (TR)
(74) Representative: Dericioglu, Ekin

(57) **Abstract**

The present invention relates to a vehicle having a door with electromagnetic lock which enables the sliding door on the vehicles to remain fixed on the vehicle body after it is opened. The vehicle (I) comprises a body (2), a door (3) which is located on the body (2) and has a sliding structure, a guide (4) which is fixed on the body (2) and enables to change the position of the door (3) in order that the door (3) is opened and closed, a magnet (5) which is located on the body (2) and the door (3), and a control unit (6) which generates or removes an electromagnetic field on the magnets (5).

## Description

### Field of the Invention

The present invention relates to a vehicle having a sliding door with lock which remains fixed on vehicle body after being completely opened.

### Background of the Invention

Vehicles comprise doors opening from sideways and top in a sliding manner. Generally sliding doors in vehicles are opened by sliding on a guide. The sliding door is held from the handle on the door and pushed towards vehicle body by being slided on the guide. The door pulled to a certain point is released and it comes to a stopping point by sliding on the guide with the effect of pulling force. The door coming to the stopping point remains fixed on the body by means of a mechanical system.

To close the sliding door, the door is slided on the guide in the opposite direction of opening by being held from the handle. In technique, high forces have to be applied to close and open the sliding doors. This situation makes difficulties for the driver or the passengers to get on the vehicle.

The United States patent document no. US2006232100, an application in the state of the art, discloses an apparatus used to hold the sliding vehicle door in a half open position.

### Summary of the Invention

The objective of the present invention is to realize a vehicle having a sliding door with electromagnetic lock which remains fixed on the vehicle body after being completely opened.

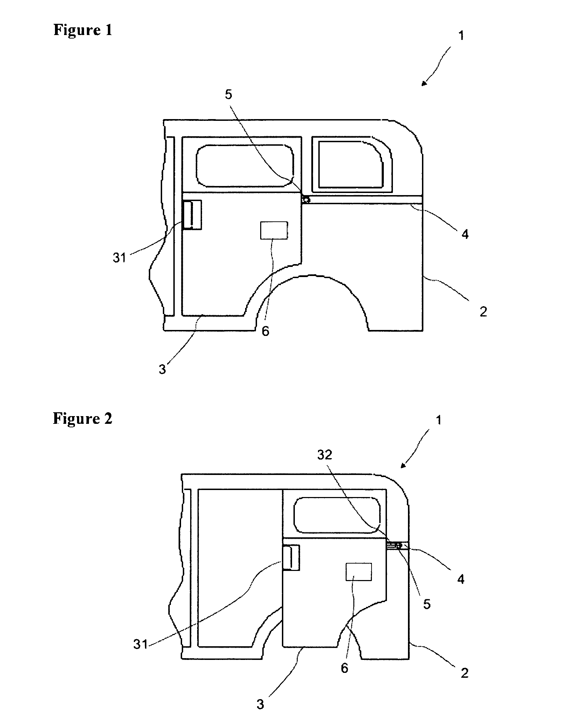

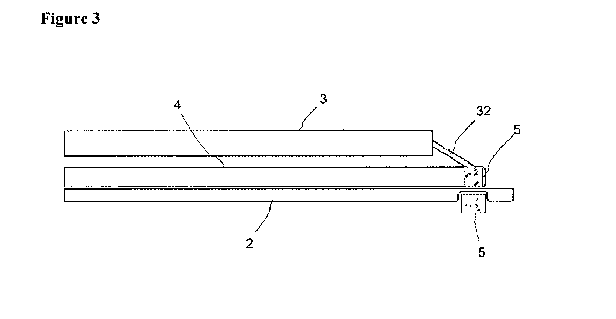

A further objective of the present invention is to realize a vehicle having a sliding door with ergonomic lock which does not require much force for opening-closing process of the vehicle door.**Detailed Description of the Invention** A vehicle having a sliding door with lock realized to fulfill the objectives of the present invention is illustrated in the accompanying figures, in which,
Figure -1 is the side view of the inventive vehicle door in closed position.
Figure -2 is the side view of the inventive vehicle door in open position.
Figure 6 is the sectional view of the door on the body.

The components shown in the figures are individually numbered where the numbers refer to the following:
1. Vehicle
2. Body
3. Door
   31. Handle
   32. Connection member
4. Guide
5. Magnet
6. Control unit

The inventive vehicle (1) essentially comprises:
- a body (2),
- at least one door (3) which is located on the body (2) and has a sliding structure,
- at least one guide (4) which is fixed on the body (2) and enables to change position of the door (3) in order that the door (3) is opened and closed,
- at least two magnets (5) which are located on the body (2) and the door (3),
- a control unit (6) which generates or removes an electromagnetic field on the magnets (5).

The guide (4) is mounted on the body (2). In the preferred embodiment of the invention, the guide (4) is located on the movement direction of the door (3).

The door (3) has at least one handle (31) on which the user applies force to carry out the opening and closing process and at least one connection member (32) moving on the guide (4).

The connection member (32) is fixed to the door (3) from one end thereof. In the preferred embodiment of the invention, the magnet (5) is fixed to the end of the connection member (32) which is not connected to the door (3).

An electromagnetic field is generated on the magnets (5) with the triggering of control unit (6). By this means the magnets (5) attract or repel each other. The magnets (5) attracting each other enable the door (3) to remain fixed in open position on the body (2). The user can close the door (3) by applying less force upon the control unit (6) removes the electromagnetic field that it forms on the magnet (5).

In the preferred embodiment of the invention, one of the magnets (5) is fixed to the end of the connection member (32) on the door (3), whereas the other is fixed on the body (2).

The magnet (5) located at the end of the connection member (32) moves with the door (3) within the guide (4).

The user can open or close the door (3) by applying force to the handle (31) and releases the handle (31) when it comes to the point where it can slide on the guide (4). After the user releases the handle (31), the user enables the door (3) to slide on the guide (4) by pushing the door (3), thus the position of the door (3) on the body (2) changes.

At the very moment the handle (31) is pulled by the user to open the door (3), the control unit (6) generates an electromagnetic field on the magnets (5) by sending current to the magnets (5). When the user pushes the door (3) till the last sliding point on the guide (4) to open the door (3), the magnets (5) on the body (2) enable the door (3) to remain open on the body (2) by attracting each other because of the electromagnetic field thereof.

When the user decides not to open the door (3), while the opening process is continuing, in other words when the door (3) is half-open position, he/she applies force to the door in opposite of the opening direction. At this point the control unit (6) removes the electromagnetic field by cutting the current going to the magnets (5). At this situation the door (3) can be taken to the closed position easily.

At the very moment the handle (31) is pulled by the user to close the door (3) which is in completely open position, the control unit (6) removes the electromagnetic field existing on the magnets (5) by cutting the current going to the magnets (5). When the user pushes the door (3) to the closing direction on the guide (4), the door (3) can easily be closed as electromagnetic field does not exist.

When the user decides not to close the door (3) and wants to take it to the open position, he/she applies force to the door (3) in opposite direction of closing. At this point control unit (6) generates an electromagnetic field by sending current to the magnets (5). At this situation the door (3) can easily come to the open position.

There is no current on the magnets (5) when the door (3) is closed.

It is possible to develop various embodiments of the inventive vehicle (1). The invention cannot be limited to the examples described herein; it is essentially according to the claims.

## Claims

1. A vehicle (1) comprising a body (2),
- at least one door (3) which is located on the body (2) and has a sliding structure,
- at least one guide (4) which is fixed on the body (2) and enables to change position of the door (3) in order that the door (3) is opened and closed
**characterized by**
- at least two magnets (5) which are located on the body (2) and the door (3), and
- a control unit (6) which generates or removes an electromagnetic field on the magnets (5).

2. A vehicle (1) according to Claim 1, **characterized by** the guide (4) which is mounted on the body (2) and located on the movement direction of the door (3).

3. A vehicle (1) according to Claim 1 or 2, **characterized by** the door (3) which has at least one handle (31) on which the user applies force to carry out the opening and closing process and at least one connection member (32) moving on the guide (4).

4. A vehicle (1) according to any of the preceding claims, **characterized by** magnets (5) one of which is fixed to end of connection member (32) which end is not connected to the door, the connection member being connected to the door from one end thereof; while the other magnet is fixed on the body (2).

5. A vehicle (1) according to any of the preceding claims **characterized by** the magnets (5) which enable the door (3) to remain fixed in open position on the body (2) by attracting each other.

6. A vehicle (1) according to any of the preceding claims, **characterized by** the magnet (5) which moves with door (3) in the guide (4) by being located at the end of the connection member (32).

## Amended claims

### Amended claims in accordance with Rule 137(2) EPC.

**1.** A vehicle (1) comprising a body (2),
- at least one door (3) which is located on the body (2) and has a sliding structure,
- at least one guide (4) which is fixed on the body (2) and enables the door (3) to change its position in order that the door (3) is opened and closed,
- at least two magnets (5) which are located on the body (2) and the door (3),
**characterized by**
- a control unit (6) which generates or removes an electromagnetic field on the magnets (5).

**2.** A vehicle (1) according to claim 1, **characterized by** control unit (6) which generates or removes electromagnetic field on the magnets (5) in order that they perform door (2) closing and opening processes.
